# EUROPEAN PATENT APPLICATION

(11) **EP 3 301 281 A2**
(43) Date of publication of application: **04.04.2018**
(21) Application number: 17191531.7
(22) Date of filing: 18.09.2017
(51) Int. Cl.: F02D 41/06, F02D 31/00, F02P 5/15, F02D 41/02

(54) **START CONTROL DEVICE FOR SADDLED VEHICLE**

(30) Priority: 29.09.2016 JP 2016191678
(71) Applicant: HONDA MOTOR CO., LTD., Tokyo 107-8556 (JP)
(72) Inventor: Koyama, Katsumi, Saitama, 351-0193 (JP); Uematsu, Hideki, Saitama, 351-0193 (JP); Kobayashi, Fuyuki, Saitama, 351-0193 (JP); Azumagakito, Isao, Saitama, 351-0193 (JP); Yamamoto, Katsumi, Saitama, 351-0193 (JP); Ogino, Kazumasa, Saitama, 351-0193 (JP)
(74) Representative: Beder, Jens

(57) **Abstract**

When start control is initiated, the start control device operates in a first operating mode in which an upper limit value of an engine speed is limited to a first upper limit value (NErev1) that is lower than an upper limit value (NErev0) in a non-start control. When an elapsed period of time after a throttle opening has exceeded a predetermined opening in the first operating mode reaches a predetermined standby time, the start control device operates in a second operating mode in which the upper limit value of the engine speed is limited to a second upper limit value (NErev2) that is lower than the first upper limit value. The start control device transitions to an ordinary mode to thereby terminate the start control when a period of time of the second operating mode reaches a predetermined control period of time or a forced cancellation condition holds.

## Description

### Technical Field

The present invention relates generally to start control devices for saddled vehicles and, more particularly, to a start control device suitable for a saddled vehicle (motocrosser) for use in a motocross race in which all attending motorcycles start using starting gates.

### Background Art

When a saddled vehicle is started on a road surface on which tires can exhibit only a weak road gripping force, such as a rough road surface, the engine speed can be excessively high, so that a drive wheel starts slipping.

JP 5798387 B2 discloses a technique for achieving favorable acceleration performance in a saddled vehicle regardless of the road surface condition. The technique disclosed in JP 5798387 B2 operates as follows. Specifically, when the current condition is determined to be before the vehicle is started, the ignition timing is controlled so that the engine speed is a target value; meanwhile, the target value is determined in accordance with a clutch operating state and, when the clutch starts slipping to cause the engine speed to decrease or otherwise fluctuate, the target value is reduced to match the fluctuation, so that the engine speed can be brought to reach the target value when the clutch is engaged and the vehicle is to be accelerated.

### Summary of Invention

### Problems to be Solved by the Invention

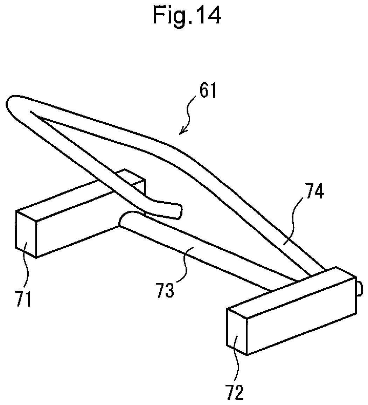

In a motocross race competing for speed in running on a rough road surface, dozens of motocrossers are lined up side-by-side in a row and start all at once using starting gates. A starting gate mainly includes, as exemplarily depicted in FIG. 14, two gate bases 71 and 72, a connecting bar 73, and a U-shaped gate bar 74. The two gate bases 71 and 72 extend in parallel with each other on both sides of the starting gate along a vehicle starting direction. The connecting bar 73 connects and fixes each of the gate bases 71 and 72 on first end sides thereof. The U-shaped gate bar 74 is rotatably supported at the first end side of each of the gate bases 71 and 72. A rider of the motocrosser waits for the U-shaped gate bar 74 to lower before starting the motocrosser.

In the motocross race using the starting gate, a drive wheel (rear wheel) of the motocrosser, though located on a rough road surface at starting, climbs over a starting gate 61 immediately after the starting and thereafter travels again on the rough road surface.

The motocrosser is to accelerate while climbing over the connecting bar 73 and the lowered U-shaped gate bar 74 of the starting gate 61. The motocrosser can, however, exhibit only a weaker road gripping force on the respective bars 73 and 74 than on the rough road surface. Thus, when an output that is similar in level to an output on the rough road surface is applied to the drive wheel, the drive wheel slips, resulting in degraded acceleration performance.

In general, the motocrosser undergoes a great change in road surface conditions when climbing over the starting gate 61 and accelerating. Each rider thus makes full use of sophisticated techniques in throttle operation and clutch operation on the basis of the respective riders own experience. The method that uniformly controls the engine output on the basis of throttle operation or clutch operation, as in the technique disclosed in Patent Document 1, cannot contribute a lot to improved acceleration performance despite its complexity.

It is an object of the present invention to provide a start control device suitable for a saddled vehicle such as a racing motocrosser that climbs over a starting gate to start and accelerate.

### Solution to Problems

To achieve the afore-mentioned object, a start control device for a saddled vehicle, changing an upper limit value of an engine speed upon start of the vehicle in accordance with a vehicle condition of the present invention is characterized by having following constitutions.
(1) A start mode switch (28), a start control unit (25) that initiates start control on condition that at least the start mode switch being operated to be turned ON, and an ignition control unit (26) that restricts ignition of an engine such that an engine speed does not exceed the upper limit value in the start control, wherein the start control unit (25) includes a first operating mode in which, in the start control, the upper limit value of the engine speed is limited to a first upper limit value (NErev1) that is lower than an upper limit value (NErev0) in a non-start control, a second operating mode in which, in the start control, the upper limit value of the engine speed is limited to a second upper limit value (NErev2) that is lower than the first upper limit value (NErev1), and the start control unit operates in the first operating mode when the start control is initiated, operates in the second operating mode when an elapsed period of time after a throttle opening has exceeded a predetermined opening in the first operating mode reaches a predetermined standby time, and terminates the start control when a period of time of the second operating mode reaches a predetermined control period of time.
(2) After the start control has been terminated, the ignition of the engine and a fuel injection amount are limited such that the engine speed does not exceed the upper limit value in the non-start control.
(3) The start control unit initiates the start control on further condition that at least a gear position in a second speed or lower.
(4) The start control unit terminates the start control upon detection of the gear position in a third speed or higher during the start control.
(5) The ignition control unit prohibits the ignition of the engine when the engine speed exceeds the upper limit value in each of the operating modes.
(6) The start control unit terminates the start control when the throttle opening is less than a predetermined threshold during the start control.
(7) The start mode switch is disposed near a handlebar grip (32) of a handlebar (31) of the saddled vehicle.
(8) The first upper limit value and the second upper limit value of the engine speed are higher than a speed at which an engine output characteristic exhibits a peak.
(9) The first upper limit value is such that the engine output characteristic can be limited to fall within a range in which traction of a drive wheel of the saddled vehicle on a rough road surface is not lost.
(10) The second upper limit value is such that the engine output characteristic can be limited to fall within a range in which traction of the drive wheel of the saddled vehicle is not lost when the drive wheel climbs over a starting gate.

### Advantageous Effects of Invention

According to the present invention, the following effects are achieved.
(1) The present invention is characterized by having a start mode switch (28), a start control unit (25) that initiates start control on condition that at least the start mode switch being operated to be turned ON as one of requirements, and an ignition control unit (26) that restricts ignition of an engine such that an engine speed does not exceed the upper limit value in the start control, wherein the start control unit (25) includes a first operating mode in which, in the start control, the upper limit value of the engine speed is limited to a first upper limit value (NErev1) that is lower than an upper limit value (NErev0) in a non-start control, a second operating mode in which, in the start control, the upper limit value of the engine speed is limited to a second upper limit value (NErev2) that is lower than the first upper limit value (NErev1), and the start control unit operates in the first operating mode when the start control is initiated, operates in the second operating mode when an elapsed period of time after a throttle opening has exceeded a predetermined opening in the first operating mode reaches a predetermined standby time, and terminates the start control when a period of time of the second operating mode reaches a predetermined control period of time. Thus, the start control device can be achieved using a simple system that uses as parameters only the throttle opening and the elapsed period of time.
(2) After the start control has been terminated, the ignition of the engine and the fuel injection amount are limited such that the engine speed does not exceed the upper limit value in the non-start control. Thus, after the start control has been terminated, the control can quickly transition to output control optimized for types of driving the motocrosser is assumed to undergo.
(3) The start control unit initiates the start control on further condition that a gear position in a second speed or lower. Thus, erroneous transition to output control unique to the start mode can be prevented from occurring even when the start mode switch is mistakenly operated during traveling.
(4) The start control unit terminates the start control upon detection of the gear position in a third speed or higher during the start control. Thus, inconvenience can be prevented in which the start control is continuously performed against rider's will.
(5) The ignition control unit prohibits the ignition of the engine when the engine speed exceeds the upper limit value in each of the operating modes. Thus, as compared with a case in which the upper limit value of the engine speed is limited by fuel cut, response and follow-up performance of the engine speed can be improved when an operation is detected to increase the engine speed after the start control has been terminated.
(6) The start control unit terminates the start control when the throttle opening is less than a predetermined threshold during the start control. Thus, the start control can be terminated on the basis of a vehicle operation performed by the rider.
(7) The start mode switch is disposed near the handlebar grip of the handlebar on the premise that a malfunction prevention function based on the gear position is to be mounted. The start mode can thus be readily and accurately started together with the malfunction prevention function based on the gear position.
(8) The first upper limit value and the second upper limit value of the engine speed are higher than a speed at which an engine output characteristic exhibits a peak. Thus, reduction in output involved in reduced engine speeds when the clutch is engaged can be prevented, so that the rider can easily perform accelerator and clutch operation.
(9) The first upper limit value is such that the engine output characteristic can be limited to fall within a range in which traction of a drive wheel of the saddled vehicle on a rough road surface is not lost. Thus,the drive wheel can maintain a satisfactory gripping force even during starting from a rough road surface, so that favorable acceleration performance can be achieved.
(10) The second upper limit value is such that the engine output characteristic can be limited to fall within a range in which traction of the drive wheel of the saddled vehicle is not lost when the drive wheel climbs over a starting gate. Thus, the drive wheel can maintain a satisfactory gripping force even during acceleration for climbing over the starting gate, so that favorable acceleration performance can be achieved.

### Brief Description of Drawings

FIG. 1 is a functional block diagram depicting a configuration of an engine control device to which start control according to an embodiment of the present invention is applied.
FIG. 2 is a timing chart of the start control that establishes an operating mode upon start of a vehicle and sets an upper limit value of an engine speed in accordance with the established operating mode.
FIG. 3 is a state transition diagram of each operating mode in the start control.
FIG. 4 is a main flowchart of the start control.
FIG. 5 is a flowchart depicting steps to be followed to determine whether or not operating mode transition is enabled.
FIG. 6 is a flowchart depicting steps to be followed to determine whether or not transition from a start standby mode to a gate climb-over mode is enabled.
FIG. 7 is a flowchart depicting steps to be followed to determine whether or not transition is to be enabled in the gate climb-over mode.
FIG. 8 is a flowchart depicting steps to be followed in a start mode cancellation determination.
FIG. 9 is a flowchart depicting steps of a forced cancellation condition selection process.
FIG. 10A, FIG. 10B and FIG. 10C illustrate schematic views depicting relations between positions of a motocrosser relative to a starting gate and operating modes.
FIG. 11 is a graph depicting a relation between an engine speed and output (output characteristic).
FIG. 12 is an illustration depicting an exemplary mounting of a start mode switch in an area near a right grip.
FIG. 13 is an illustration depicting an exemplary mounting of the start mode switch in an area near a left grip.
FIG. 14 is a perspective view depicting an exemplary starting gate.

### Description of Embodiments

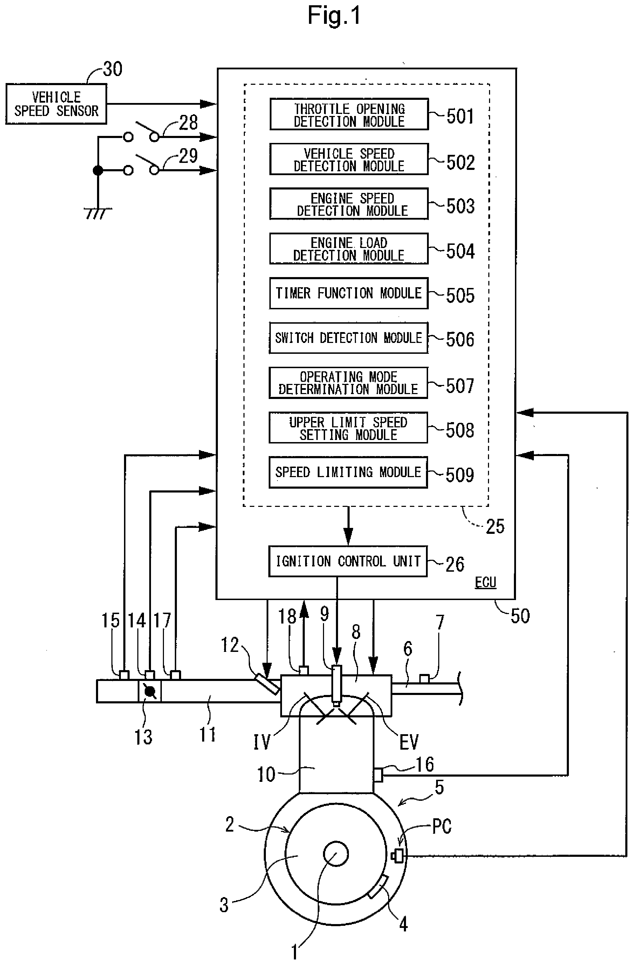

FIG. 1 is a functional block diagram depicting a configuration of an engine control device to which start control according to an embodiment of the present invention is applied. FIG. 1 omits any configuration that is unnecessary for the description of the present invention.

An engine 5 includes a cylinder 10 that, in turn, includes a cylinder head 8 disposed at an upper portion of the cylinder 10. The cylinder head 8 includes an intake valve IV and an exhaust valve EV The engine 5 further includes a crankshaft 1 on which a crank pulser rotor 2 is mounted.

The crank pulser rotor 2 includes a rotor 3 that rotates synchronously with the crankshaft 1 and a reluctor 4. A magnetic pick-up type pulse generator PC is disposed to face an outer periphery of the rotor 3. The pulse generator PC outputs an ON signal or OFF signal of a crank pulse depending on presence of the reluctor 4. The crank pulse is applied to an engine control unit (ECU) 50.

An airflow sensor 15, a throttle opening sensor 14, and an intake pressure sensor 17 are mounted in an intake pipe 11. The airflow sensor 15 measures an intake air amount. The throttle opening sensor 14 outputs a signal that corresponds to an opening of a throttle valve 13 (throttle opening). The intake pressure sensor 17 detects intake pressure.

A temperature sensor 16 that detects a temperature of the engine 5 is mounted on the cylinder 10. An ignition device 9 is disposed at an upper portion of a combustion chamber. A fuel injection device 12 is disposed downstream of the throttle valve 13 in the intake pipe 11. An oxygen concentration sensor 7 is mounted on an exhaust pipe 6. A piezoelectric element type cylinder pressure sensor, for example, may be disposed on the ignition device 9.

The ECU 50 includes a start control unit 25 and an ignition control unit 26. The start control unit 25 initiates start control on condition that at least a start mode switch 28 being operated to be turned ON. The start control unit 25 then performs the start control with reference to, for example, a function selection switch 29. The start mode switch 28 and the function selection switch 29 will be described in detail later. The ignition control unit 26 prohibits ignition of the engine in response to an ignition prohibition command from the start control unit 25.

In the start control unit 25, a throttle opening detection module 501 detects the throttle opening on the basis of an output from the throttle opening sensor 14. A vehicle speed detection module 502 detects a vehicle speed on the basis of an output from a vehicle speed sensor 30. An engine speed detection module 503 detects an engine speed on the basis of a crank pulse. An engine load detection module 504 detects presence of an engine load. A timer function module 505 measures various types of elapsed period of time. A switch detection module 506 detects an open or closed state of various types of switches including the start mode switch 28 and the function selection switch 29.

An operating mode determination module 507 determines an operating mode during the start control. An upper limit speed setting module 508 sets an upper limit value of the engine speed in accordance with the operating mode. A speed limiting module 509 outputs an ignition prohibition command to the ignition control unit 26 so that the engine speed is limited to the upper limit value (NErev0, NErev1 or NErev2) in accordance with each operating mode. Each of the above-described functions can be achieved on the basis of a previously stored program and parameters.

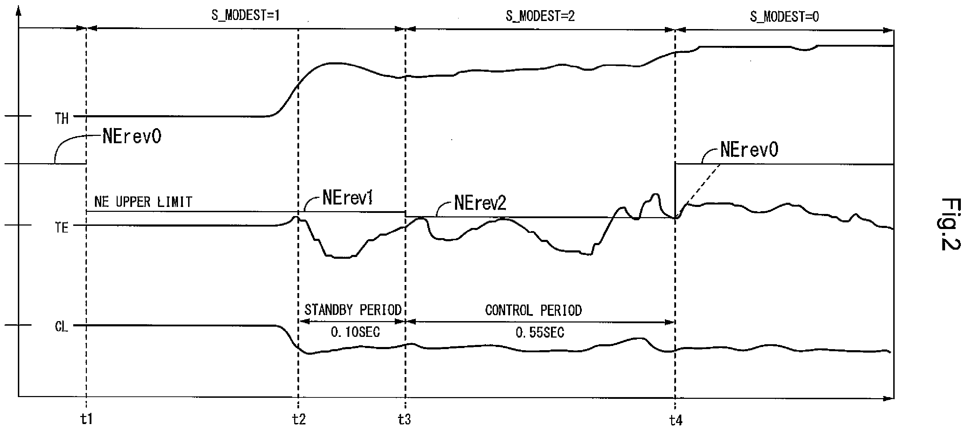

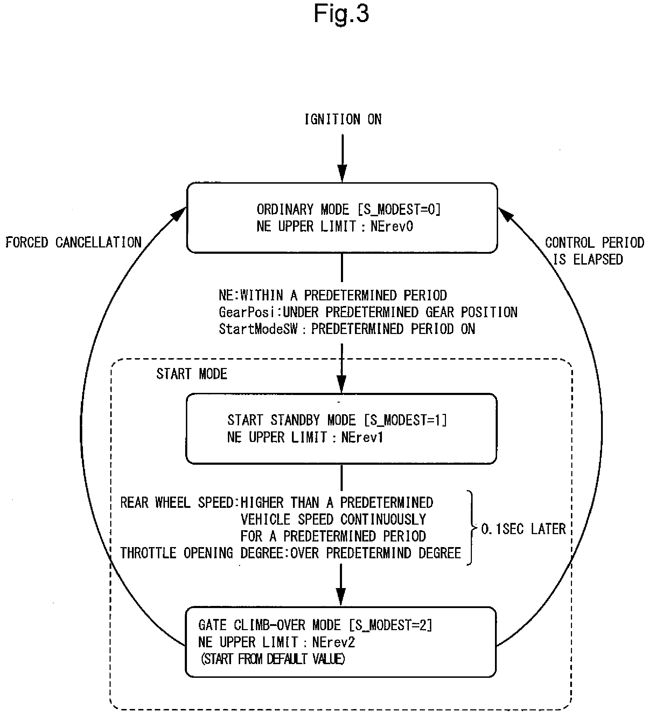

FIG. 2 is a timing chart of the start control in which the operating mode determination module 507 establishes the operating mode in accordance with vehicle behavior upon start of the vehicle and the upper limit speed setting module 508 sets the upper limit value of the engine speed in accordance with the established operating mode. FIG. 3 is a state transition diagram of each operating mode in the start control.

When the vehicle ignition switch is turned ON and the engine is started, the operating mode transitions to an ordinary mode [S_MODEST=0]. In the ordinary mode (non-start control), the upper limit value of the engine speed NE is set to an engine upper limit value NErev0 that depends on engine specifications. An engine ignition timing and a fuel injection amount are then controlled to thereby limit the engine speed to the upper limit value NErev0.

The operating mode transitions to a start standby mode [S_MODEST=1] of the start control when, in the ordinary mode [S_MODEST=0], the engine speed NE falls within a predetermined range, a gear position is a predetermined speed or lower, and the start mode switch 28 is detected to have been turned ON continuously for a predetermined period of time. In the example depicted in FIG. 2, the operating mode transitions from the ordinary mode of the non-start control to the start standby mode [S_MODEST=1] of the start control at time t1.

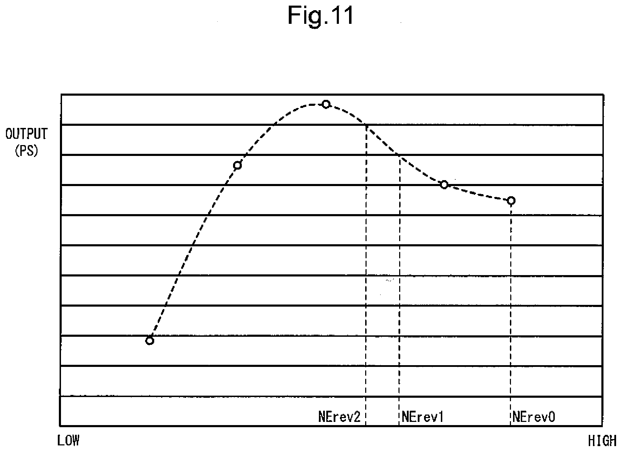

In the "start standby mode [S_MODEST=1]" to which the vehicle has transitioned, the upper limit value of the engine speed NE is set to a start standby upper limit value (a first upper limit value) NErev1 that, as depicted in FIG. 11, falls within a speed range just after a peak in engine output and that is slightly lower than the engine upper limit value NErev0.

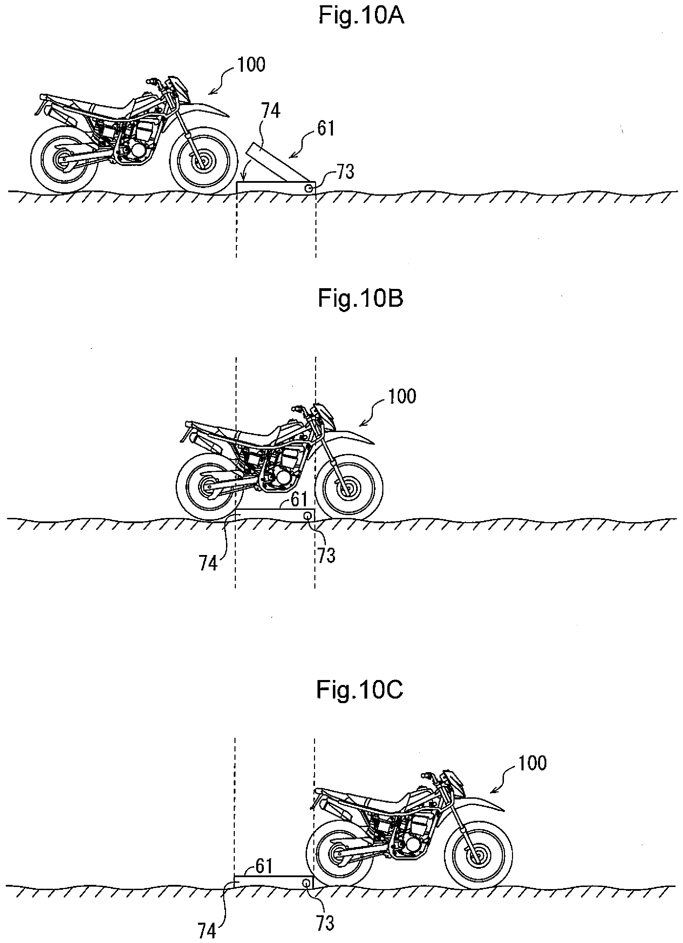

When a motocrosser 100 starts from a rough road surface as depicted in FIG. 10A, the upper limit value NErev1 is set to a value that can limit an output characteristic (FIG. 11) dependent on the engine speed NE to a range in which traction of the drive wheel is not lost. The speed limiting module 509 instructs the ignition control unit 26 to prohibit ignition of the engine such that the upper limit value of the engine speed NE is limited to the first upper limit value NErev1.

In the present embodiment, ignition prohibition control is initiated when the engine speed detection module 503 detects that the engine speed has reached a predetermined upper limit value Nrev. As a result, when a highly accelerated engine speed reaches the upper limit value Nrev, crank mass inertia may cause an overshoot to occur beyond the upper limit value Nrev. Thus, in the example depicted in FIG. 2, a slight overshoot occurs in a period before time t4.

When the U-shaped gate bar 74 of the starting gate 61 lowers to set a start ready state and the rider then connects a clutch CL while opening the throttle to start the vehicle, the operating mode transitions to a gate climb-over mode [S_MODEST=2].

In the present embodiment, when a rear wheel speed is equal to or higher than a predetermined vehicle speed continuously for a predetermined period of time or the throttle opening exceeds a reference opening in the start standby mode [S_MODEST=1], a timer is started and, after the lapse of a predetermined standby period of time, the operating mode transitions to the gate climb-over mode [S_MODEST=2].

In the example depicted in FIG. 2, the timer is started at time t2 at which the throttle opening TH exceeds the reference opening and, after the lapse of the predetermined standby period of time (e.g., 0.1 second), the operating mode transitions to the gate climb-over mode [S_MODEST=2] at time t3.

In addition to the changeover of the upper limit value Nrev of the engine speed NE made in a stepwise fashion as described above when the operating mode transitions from the gate climb-over mode [S_MODEST=2] to the ordinary mode [S_MODEST=0] at time t4, the changeover may be made at a mild pace by gradually increasing the upper limit value at a predetermined rate from time t4 as indicated by the broken line in FIG. 2.

Even with the transition of the operating mode to the ordinary mode [S_MODEST=0] from the gate climb-over mode [S_MODEST=2] in which the engine speed NE is near the upper limit value NErev2, the change of the upper limit value at a mild pace as described above prevents engine drive power from undergoing a sudden change, so that the drive wheel tends to maintain a road gripping force thereof.

Reference is made to FIG. 11. In the gate climb-over mode [S_MODEST=2], the upper limit value of the engine speed NE is set to the starting gate climb-over upper limit value (a second upper limit value) NErev2 that falls within the speed range just after the peak in the engine output and that is even lower than the start standby upper limit value NErev1.

When the motocrosser 100 accelerates while having the drive wheel climbing over the connecting bar 73 and the U-shaped gate bar 74 of the starting gate 61 as depicted in FIG. 10B, the upper limit value NErev2 is set to a value that can limit the output characteristic (FIG. 11) dependent on the engine speed NE to a range in which traction of the rear wheel is not lost. The speed limiting module 509 instructs the ignition control unit 26 to prohibit ignition of the engine such that the upper limit value of the engine speed NE is limited to the second upper limit value NErev2.

When, in the gate climb-over mode [S_MODEST=2], the elapsed period of time after the transition to the gate climb-over mode is equal to or longer than a predetermined control period of time (0.55 second in the present embodiment) and when a timing is reached at which the drive wheel can be determined to have climbed over the connecting bar 73 and the U-shaped gate bar 74 of the starting gate 61 as depicted in FIG. 10c, the operating mode transitions to the ordinary mode and the upper limit value of the engine speed is set to the engine upper limit value NErev0. The start control is thereby terminated.

In the example depicted in FIG. 2, the operating mode transitions to the ordinary mode at time t4 at which the control period of time corresponding to the passage of the gate is determined to have elapsed. The speed limiting module 509 controls the ignition timing and the fuel injection amount such that the upper limit value of the engine speed NE is limited to the engine upper limit value NErev0. The operating mode is forced to transition to the ordinary mode when, in the gate climb-over mode [S_MODEST=2], the elapsed period of time exceeds the predetermined control period of time or the forced cancellation condition to be described in detail later holds.

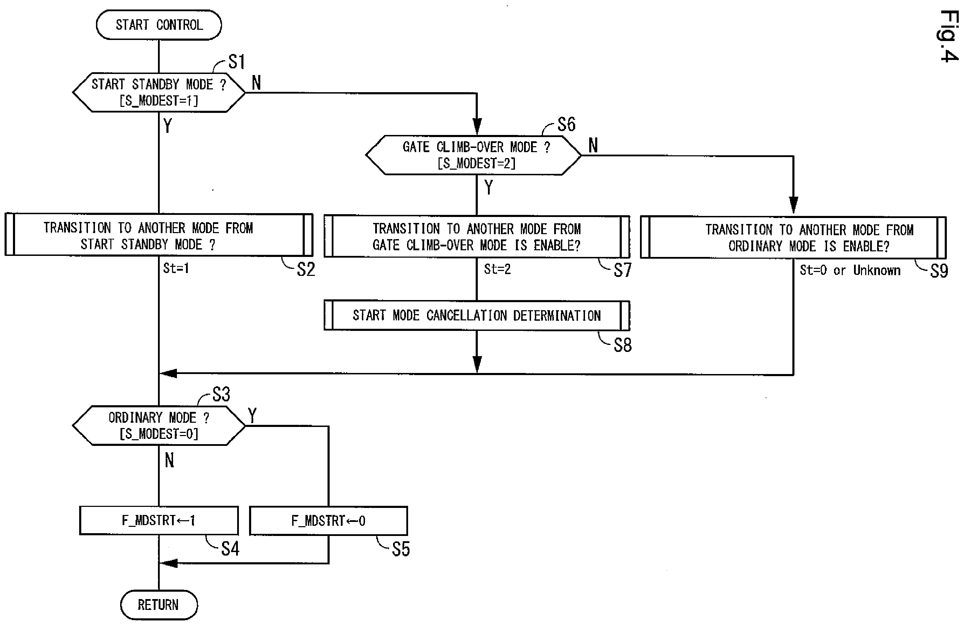

FIG. 4 is a flowchart depicting steps to be followed in the start control in the present invention, in which the operating mode determination module 507 establishes the operating mode and the upper limit speed setting module 508 dynamically changes the upper limit value of the engine speed in accordance with the established operating mode.

In Step S1, it is determined whether or not the current operating mode is the start standby mode [S_MODEST=1]. If it is determined that the current operating mode is not the start standby mode, Step S6 is performed and it is determined whether or not the current operating mode is the gate climb-over mode [S_MODEST=2]. If it is determined that the current operating mode is not the gate climb-over mode, either, it is determined that the current operating mode is the ordinary mode [S_MODEST=0] or is yet to be set. Then, Step S9 is performed and it is determined whether or not transition to another operating mode is enabled.

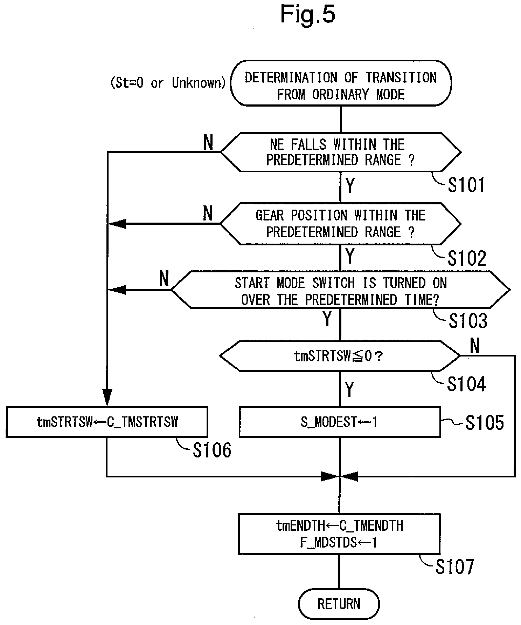

FIG. 5 is a flowchart depicting steps to be followed to determine whether or not the operating mode transition is enabled in Step S9. In Step S101, it is determined whether or not the engine speed NE falls within the range that enables transition to the start standby mode [S_MODEST=1]. If it is determined that the engine speed NE falls within the range, Step S102 is performed. In Step S102, it is determined whether or not the current gear position falls within the range that enables transition to the start standby mode [S_MODEST=1].

In the present embodiment, the gear position in the second speed or the first speed is determined to fall within the range that enables transition and Step S103 is then performed. If initiation of the start control is based on condition that the gear position is the second speed or lower as described above, erroneous transition to engine speed control unique to the start mode can be prevented from occurring even when the start mode switch is mistakenly operated during traveling.

In Step S103, it is determined whether or not the start mode switch 28 is turned ON. If it is determined that the start mode switch 28 is turned ON, Step S104 is then performed and it is determined whether or not a start mode switch continuation timer tmSTRTSW has timed out. If it is determined that the timer tmSTRTSW has timed out, it is then determined that the start mode switch 28 has been tuned ON continuously for a predetermined period of time or longer. Step S105 is then performed and the operating mode transitions to the start standby mode [S_MODEST=1].

In contrast, if it is determined in Step S101 that the engine speed NE falls outside the range that enables transition to the start standby mode or if it is determined in Step S102 that the current gear position falls outside the range that enables transition to the start standby mode (specifically, the gear position is the third speed or higher), or if it is determined in Step S103 that the start mode switch 28 is not turned ON continuously for the predetermined period of time or longer, then Step S106 is performed.

As such, in the present embodiment, the start control is terminated when the gear position in the third speed or higher is detected during the start control. Inconvenience in which the start control is continuously performed unnecessarily can be prevented.

In Step S106, a default value is set in the start mode switch continuation timer tmSTRTSW and the start mode switch continuation timer tmSTRTSW starts a downward counting sequence. Specifically, in the present embodiment, transition to the start standby mode [S_MODEST=1] is enabled when the conditions of Steps S101, S102, and S103 hold continuously for the predetermined period of time defined by the default value. In Step S107, a cancellation determination threshold C_TMENDTH is set in a start mode cancellation timer tmENDTH and the start mode cancellation timer tmENDTH starts a downward counting sequence. Additionally, a start mode cancellation command is set (specified).

Reference is made back to FIG. 4. If it is determined in Step S1 that the current operating mode is the start standby mode [S_MODEST=1], Step S2 is then performed and a step is performed to determine, on the basis of the rear wheel speed or the throttle opening, whether or not the transition from the start standby mode to the gate climb-over mode [S_MODEST=2] is enabled.

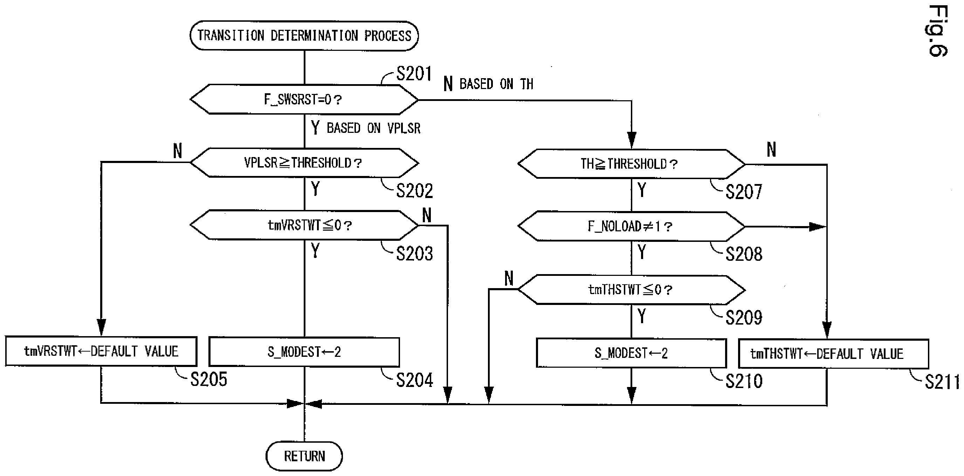

FIG. 6 is a flowchart depicting steps to be followed to determine whether the transition from the start standby mode to the gate climb-over mode is enabled. In Step S201, reference is made to a determination index flag F_SWSRST that determines a specific index, either the rear wheel speed or the throttle opening, to be used for determining whether or not the transition of the operating mode is to be enabled.

If the determination index flag F_SWSRST is reset (= 0), Step S202 is performed to make the determination on the basis of the rear wheel speed. In Step S202, it is determined whether or not a rear wheel speed VPLSR is equal to or higher than a predetermined threshold. If it is determined that the rear wheel speed VPLSR is equal to or higher than the threshold, Step S203 is performed and it is determined whether or not a condition in which the rear wheel speed VPLSR is equal to or higher than the threshold continues for a predetermined period of time or longer on the basis of whether or not a vehicle speed continuation timer tmVRSTWT has timed out.

In the present embodiment, the vehicle speed continuation timer tmVRSTWT is set to time out after 0.1 second. If the vehicle speed continuation timer tmVRSTWT has timed out, Step S204 is performed and the operating mode transitions to the gate climb-over mode [S_MODEST=2].

If it is determined in Step S202 that the rear wheel speed VPLSR is not equal to or higher than the threshold, Step S205 is performed and 0.1 second as the default value is set in the vehicle speed continuation timer tmVRSTWT and the vehicle speed continuation timer tmVRSTWT starts a downward counting sequence.

On the other hand, if it is determined in Step S201 that the determination index flag F_SWSRST is set (= 1), Step S207 is performed to determine whether or not the transition of the operating mode is to be enabled on the basis of the throttle opening. Then, it is determined whether or not the throttle opening TH is equal to or greater than a predetermined threshold.

If it is determined that the throttle opening is equal to or greater than the threshold, Step S208 is performed. Then, reference is made to a no-load flag Fnoload and the current engine load condition is determined. The engine load condition is determined on the basis of whether or not a transmission is in a neutral position. Specifically, the engine is determined to be in a no-load condition when a neutral switch that detects that the transmission is in the neutral position is ON. The engine is determined to be in any condition other than the no-load condition when the neutral switch is OFF and the transmission is in gear.

If the engine is determined to be in any condition other than the no-load condition, Step S209 is performed. It is then determined whether or not a throttle open continuation timer tmTHSTWT has timed out. If it is determined that the throttle open continuation timer tmTHSTWT has timed out, it is then determined that the condition in which the throttle opening TH is equal to or greater than the predetermined threshold continues for a predetermined period of time or longer. Then, Step S210 is performed and the operating mode transitions to the gate climb-over mode.

If it is determined in Step S207 that the throttle opening TH is smaller than the threshold or in Step S208 that the engine is in the no-load condition, Step S211 is performed and 0.1 second as the default value is set in the throttle open continuation timer tmTHSTWT and the throttle open continuation timer tmTHSTWT starts a downward counting sequence.

Reference is made back to FIG. 4. If it is determined in Step S1 that the current operating mode is not the start standby mode [S_MODEST=1] and if it is determined in Step S6 that the current operating mode is the gate climb-over mode, then Step S7 is performed. In Step S7, it is determined whether or not transition from the gate climb-over mode to another operating mode is to be enabled.

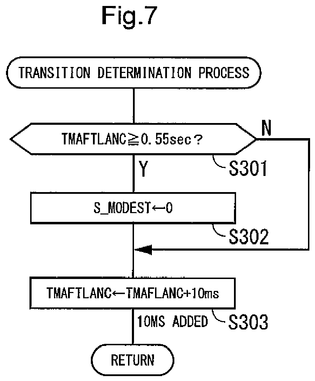

FIG. 7 is a flowchart depicting steps to be followed to determine whether or not transition is to be enabled in the gate climb-over mode [S_MODEST=2]. In Step S301, it is determined whether or not an elapsed period of time TMAFTLANC after the transition from the start standby mode [S_MODEST=1] to the gate climb-over mode is equal to or longer than a predetermined period of time. In the present embodiment, if the elapsed period of time TMAFTLANC is equal to or longer than 0.55 second, Step S302 is performed and the operating mode transitions to the ordinary mode [S_MODEST=0]. In Step S303, a count value equivalent to 10 ms is added to the elapsed period of time TMAFTLANC.

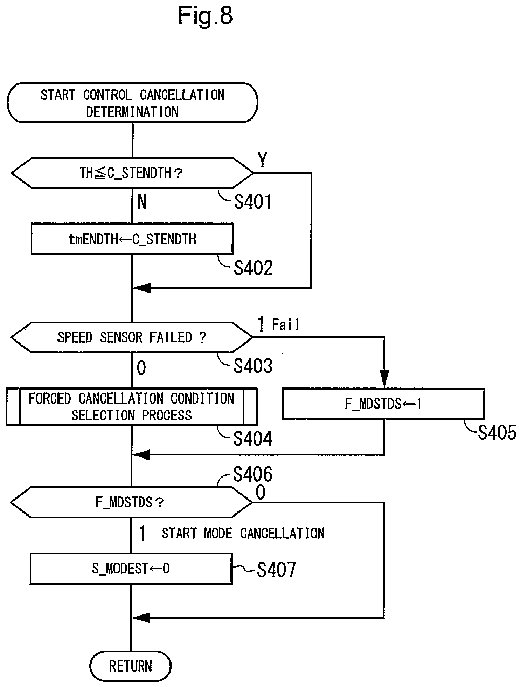

Reference is made back to FIG. 4. In next Step S8, a "start mode cancellation determination" is made. FIG. 8 is a flowchart depicting steps to be followed in the "start mode cancellation determination."

In Step S401, it is determined whether or not the throttle opening TH is equal to or smaller than a start mode cancellation threshold C_STENDTH. If it is determined that the throttle opening TH is not equal to or smaller than the start mode cancellation threshold C_STENDTH, Step S402 is performed in order to determine a continuation period of time of the start standby mode [S_MODEST=1]. In Step S402, the cancellation determination threshold C_TMENDTH is set in the start mode cancellation timer tmENDTH and the start mode cancellation timer tmENDTH starts a downward counting sequence.

In Step S403, it is determined whether or not the vehicle speed sensor 30 is determined to have failed. If it is determined that the vehicle speed sensor 30 is determined to have failed, Step S405 is performed and a start mode cancellation command flag F_MDSTDS is set (specified). In contrast, if it is determined that the vehicle speed sensor 30 is determined to have not failed, Step S404 is performed and a "forced cancellation condition selection process" to be described later is performed.

In Step S406, reference is made to the start mode cancellation command flag F_MDSTDS. If the start mode cancellation command flag F_MDSTDS is set, Step S407 is performed and the operating mode transitions to the ordinary mode [S_MODEST=0].

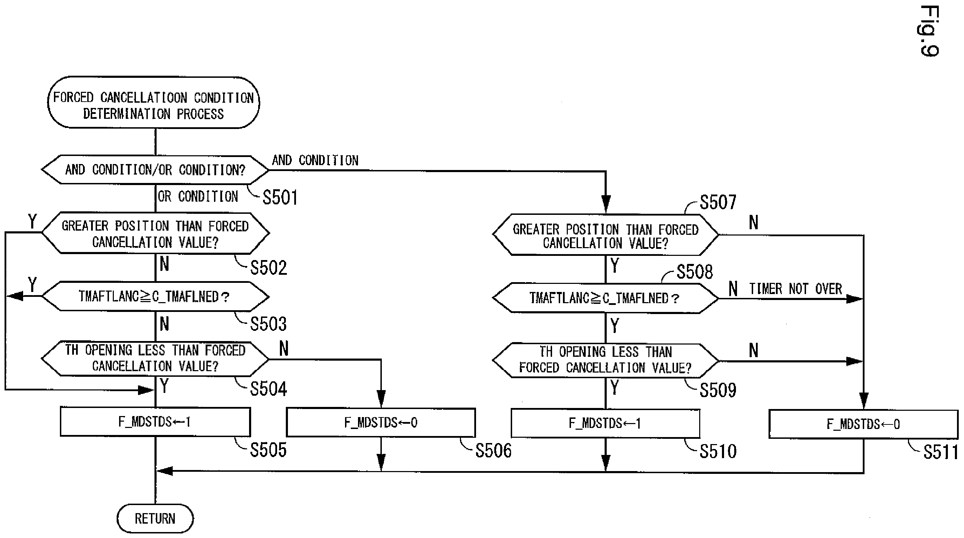

FIG. 9 is a flowchart depicting steps of the forced cancellation condition selection process performed in Step S404. In Step S501, reference is made to the function selection switch 29 that selects, as a forced cancellation determination condition, either an OR condition that requires holding of either the gear position or the throttle opening, or an AND condition that requires holding of both the gear position and the throttle opening.

If the OR condition has been selected, Step S502 is performed and it is determined whether or not the current gear position is a forced cancellation position or higher. If it is determined that the current gear position is the forced cancellation position or higher, Step S505 is performed and the start mode cancellation command flag F_MDSTDS is set.

If it is determined that the current gear position is lower than the forced cancellation position, Step S503 is performed and it is determined whether or not the elapsed period of time TMAFTLANC after the transition from the start standby mode to the gate climb-over mode [S_MODEST=2] is equal to or longer than a predetermined period of time C_TMAFLNED. If it is determined that the predetermined period of time C_TMAFLNED is exceeded, Step S505 is performed and the start mode cancellation command flag F_MDSTDS is set.

If it is determined that the predetermined period of time C_TMAFLNED is yet to be exceeded, Step S504 is performed and it is determined whether or not the cancellation condition by the throttle opening holds on the basis of whether or not the start mode cancellation timer tmENDTH has timed out and whether or not the forced cancellation on the basis of the throttle opening has been enabled.

If it is determined that the start mode cancellation timer tmENDTH has timed out (specifically, the condition in which the throttle opening is smaller than the cancellation determination threshold C_TMENDTH continues to exist for a predetermined period of time or longer) and that the forced cancellation on the basis of the throttle opening has been enabled, it is then determined that the cancellation condition by the throttle opening holds. Then, Step S505 is performed and the start mode cancellation command flag F_MDSTDS is set.

In contrast, if it is determined that the start mode cancellation timer tmENDTH has yet to time out or that the forced cancellation on the basis of the throttle opening has been disabled, it is then determined that the cancellation condition by the throttle opening does not hold. Then, Step S506 is performed and the start mode cancellation command flag F_MDSTDS is reset.

On the other hand, if it is determined on the basis of the function selection switch 29 in Step S501 that the AND condition has been selected, Step S507 is performed and it is determined whether or not the current gear position is the forced cancellation position or higher. If it is determined that the current gear position is not the forced cancellation position or higher, Step S511 is performed and the start mode cancellation command flag F_MDSTDS is reset.

If it is determined that the current gear position is the forced cancellation position or higher, Step S508 is performed and it is determined whether or not the elapsed period of time TMAFTLANC after the transition from the start standby mode [S_MODEST=1] to the gate climb-over mode [S_MODEST=2] is equal to or longer than the predetermined period of time C_TMAFLNED. If it is determined that the predetermined period of time C_TMAFLNED is not exceeded, Step S511 is performed and the start mode cancellation command flag F_MDSTDS is reset.

If it is determined that the predetermined period of time C_TMAFLNED is exceeded, Step S509 is performed and it is determined whether or not the cancellation condition by the throttle opening holds on the basis of whether or not the start mode cancellation timer tmENDTH has timed out and whether or not the forced cancellation on the basis of the throttle opening has been enabled.

If it is determined that the start mode cancellation timer tmENDTH has timed out and that the forced cancellation on the basis of the throttle opening has been enabled, it is then determined that the cancellation condition by the throttle opening holds and Step S510 is performed. In Step S510, the start mode cancellation command flag F_MDSTDS is set.

In contrast, if it is determined that the start mode cancellation timer tmENDTH has yet to time out or that the forced cancellation on the basis of the throttle opening has been disabled, it is then determined that the cancellation condition by the throttle opening does not hold and Step S511 is performed. In Step S511, the start mode cancellation command flag F_MDSTDS is reset.

In accordance with the present embodiment, the start control that prevents the drive wheel from slipping upon starting to thereby improve acceleration performance can be achieved using a simple system that uses as parameters only the throttle opening and the elapsed period of time.

Additionally, in accordance with the present embodiment, in a motocrosser that is restricted from starting at the starting gate 61, in particular, the upper limit value of the engine speed is limited to the first upper limit value for the period of time during which the drive wheel that remains a stationary state reaches the connecting bar 73 of the starting gate 61. This arrangement prevents the drive wheel from slipping on rough road surfaces, enabling the vehicle to exhibit favorable acceleration performance.

Furthermore, for the period of time during which the drive wheel, after having reached the connecting bar 73, travels past the connecting bar 73 and the U-shaped gate bar 74, the upper limit value of the engine speed is limited to the second upper limit value that is even lower than the first upper limit value. This arrangement prevents the drive wheel from slipping when climbing over the gate bar that has µ even lower than µ of rough road surfaces, so that the vehicle can exhibit favorable acceleration performance.

Furthermore, in accordance with the present embodiment, after the start control has been terminated, the ignition of the engine and the fuel injection amount are limited such that the engine speed does not exceed the upper limit value in the non-start control. Thus, after the start control has been terminated, the control can quickly transition to output control optimized for types of driving the motocrosser is assumed to undergo.

Furthermore, in accordance with the present embodiment, the ignition control unit prohibits the ignition of the engine when the engine speed exceeds the upper limit value in each of the operating modes. Thus, aAs compared with a case in which the upper limit value of the engine speed is limited by fuel cut, response and follow-up performance of the engine speed can be improved when an operation is detected to increase the engine speed after the start control has been terminated.

Furthermore, in accordance with the present embodiment, the start control unit terminates the start control when the throttle opening is less than a predetermined threshold during the start control. Thus, the start control can be terminated on the basis of a vehicle operation performed by the rider.

Furthermore, in accordance with the present embodiment, the first upper limit value and the second upper limit value of the engine speed are higher than a speed at which an engine output characteristic exhibits a peak. Thus, reduction in output involved in reduced engine speeds when the clutch is engaged can be prevented, so that the rider can easily perform accelerator and clutch operation.

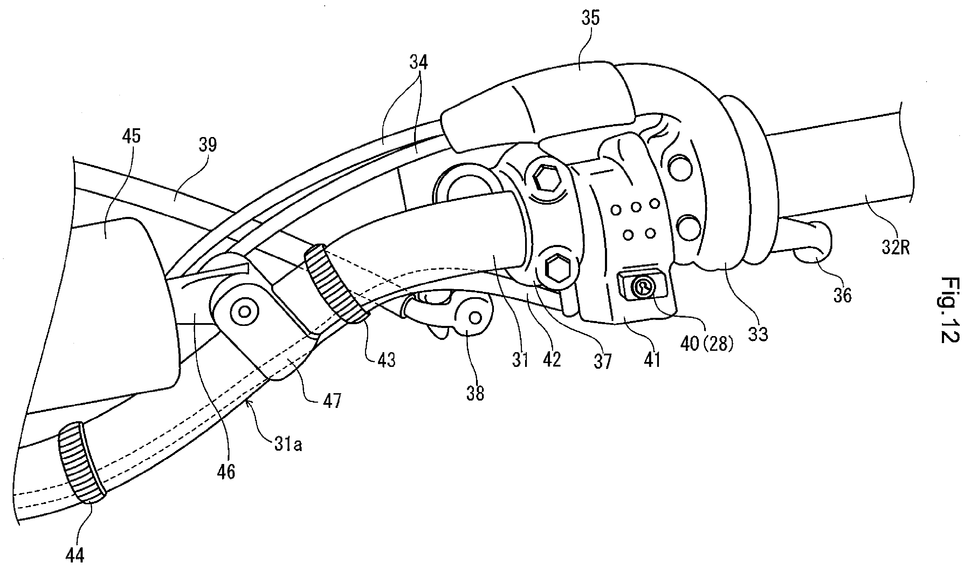

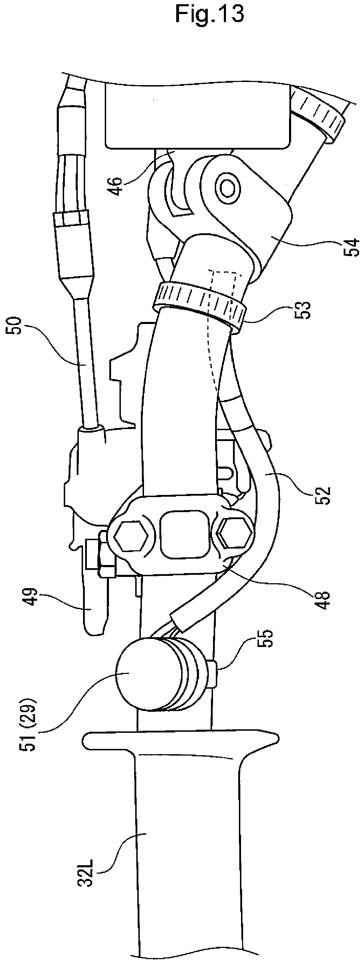

FIGS. 12 and 13 are illustrations depicting methods of mounting the start mode switch 28 on a motocrosser that includes the start control device according to the present invention. FIG. 12 illustrates exemplary mounting of the start mode switch 28 in an area near a right grip. FIG. 13 illustrates exemplary mounting of the start mode switch 28 in an area near a left grip.

Reference is made to FIG. 12. A handlebar grip 32R is disposed on a right end portion of a handlebar pipe 31 so as to be capable of throttle operation. A throttle holder 33 pulls or releases two wire cables 34 in accordance with a rotational operation of the handlebar grip 32R. A connection between the throttle holder 33 and the wire cables 34 is covered in a rubber cover 35.

A brake lever 36 is supported on the handlebar pipe 31 by a lever holder 37. A brake hose 39 is connected with a brake hose base portion 38 of the lever holder 37. A switch cover 41 is disposed between the throttle holder 33 and the lever holder 37. The switch cover 41 includes a starter switch 40 that has a function as the start mode switch 28. A wiring cord 42 extending from the switch cover 41 is tied onto the handlebar pipe 31 by resin bands 43 and 44.

In the present embodiment, when the switch 28/40 is operated to be turned ON while the engine remains stationary, the switch 28/40 acts as the starter switch 40 to thereby start the engine. In contrast, when the switch 28/40 is operated to be turned ON while the engine is running, the switch 28/40 acts as the start mode switch 28, providing a requirement for initiating the start control.

An extended portion 31a is disposed between a central mounting portion and a grip portion on either end of the handlebar pipe 31. The extended portion 31a has a predetermined angle relative to each of different parts. A cushion support bar 46 that supports a cylindrical cushion 45 is connected with the extended portion 31a via an aluminum clamp 47.

Reference is made to FIG. 13. A handlebar grip 32L is disposed on a left end portion of the handlebar pipe 31 so as not to be rotatable. A clutch lever 49 is supported by a lever holder 48 that is fixed to the handlebar pipe 31 at a position inside the handlebar grip 32L. The cylindrical cushion 45 is supported via an aluminum clamp 54 and the cushion support bar 46.

A wire cable 50 is connected with the lever holder 48. An engine stop switch 51 is disposed between the handlebar grip 32L and the lever holder 48. The engine stop switch 51 having the function as the start mode switch 28 is tied with the handlebar pipe 31 using an appropriate tying device 55. A wiring cord 52 of the engine stop switch 51 is tied with the handlebar pipe 31 by a resin band 53.

In the present embodiment, when the switch 28/51 is operated to be turned ON for less than a predetermined threshold, the switch 28/51 acts as the engine stop switch 51 to thereby bring the engine to a stop. In contrast, when the switch 28/51 is operated to be turned ON for the predetermined threshold or longer, the switch 28/51 acts as the start mode switch 28, providing a requirement for initiating the start control.

In accordance with the present embodiment, the start mode switch is disposed near the handlebar grip of the handlebar on the premise that a malfunction prevention function based on the gear position is to be mounted. The start mode can thus be readily and accurately started together with the malfunction prevention function based on the gear position.

### Reference Signs List

25... start control unit
26...ignition control unit
28... start mode switch
29...function selection switch
31...handlebar
32R, 32L...handlebar grip
33...throttle holder
34...wire cable
35...rubber cover
36...brake lever
37...lever holder
38...brake hose base portion
39...brake hose
40... starter switch
41... switch cover
42...A wiring cord
43, 44...resin bands
45...cylindrical cushion
46...cushion support bar
47... aluminum clamp
48...lever holder
49... clutch lever
50...The ECU
51...engine stop switch
52... wiring cord
53...resin band
61... starting gate
71, 72...gate base
73...connecting bar
74...U-shaped gate bar

## Claims

1. A start control device for a saddled vehicle, changing an upper limit value of an engine speed upon start of the vehicle in accordance with a vehicle condition, the start control device comprising:
a start mode switch (28);
a start control unit (25) that initiates start control on condition that the start mode switch being operated to be turned ON; and
an ignition control unit (26) that restricts ignition of an engine such that an engine speed does not exceed the upper limit value in the start control,
wherein the start control unit (25) includes
a first operating mode in which, in the start control, the upper limit value of the engine speed is limited to a first upper limit value (NErev1) that is lower than an upper limit value (NErev0) in a non-start control, and
a second operating mode in which, in the start control, the upper limit value of the engine speed is limited to a second upper limit value (NErev2) that is lower than the first upper limit value (NErev1), and
the start control unit operates in the first operating mode when the start control is initiated, operates in the second operating mode when an elapsed period of time after a throttle opening has exceeded a predetermined opening in the first operating mode reaches a predetermined standby time, and terminates the start control when a period of time of the second operating mode reaches a predetermined control period of time.

2. The start control device for a saddled vehicle according to claim 1, wherein, after the start control has been terminated, the ignition of the engine and a fuel injection amount are limited such that the engine speed does not exceed the upper limit value in the non-start control.

3. The start control device for a saddled vehicle according to claim 1 or 2, wherein the start control unit (25) initiates the start control on condition that at least a gear position in a second speed or lower.

4. The start control device for a saddled vehicle according to claim 3, wherein the start control unit (25) terminates the start control upon detection of the gear position in a third speed or higher during the start control.

5. The start control device for a saddled vehicle according to any one of claims 1 to 4, wherein the ignition control unit (26) prohibits the ignition of the engine when the engine speed exceeds the upper limit value in each of the operating modes.

6. The start control device for a saddled vehicle according to claim 3, wherein the start control unit (25) terminates the start control when the throttle opening is less than a predetermined threshold during the start control.

7. The start control device for a saddled vehicle according to any one of claims 1 to 6, wherein the start mode switch (28) is disposed near a handlebar grip (32) of a handlebar (31) of the saddled vehicle.

8. The start control device for a saddled vehicle according to any one of claims 1 to 7, wherein the first upper limit value and the second upper limit value of the engine speed are higher than a speed at which an engine output characteristic exhibits a peak.

9. The start control device for a saddled vehicle according to any one of claims 1 to 8, wherein the first upper limit value is such that the engine output characteristic can be limited to fall within a range in which traction of a drive wheel of the saddled vehicle on a rough road surface is not lost.

10. The start control device for a saddled vehicle according to any one of claims 1 to 9, wherein the second upper limit value is such that the engine output characteristic can be limited to fall within a range in which traction of the drive wheel of the saddled vehicle is not lost when the drive wheel climbs over a starting gate.
